# EUROPEAN PATENT SPECIFICATION

(11) **EP 3 522 621 B1**
(45) Date of publication and mention of the grant of the patent: **07.04.2021**
(21) Application number: 17862157.9
(22) Date of filing: 17.10.2017
(51) Int. Cl.: H04W 56/00, H04W 52/00, H04B 7/005

(54) **WAKE-UP PREAMBLE GENERATING METHOD, SYNCHRONIZATION METHOD AND APPARATUS**
VERFAHREN ZUR ERZEUGUNG EINER AUFWECKPRÄAMBEL, SYNCHRONISATIONSVERFAHREN UND -VORRICHTUNG
PROCÉDÉ DE GÉNÉRATION DE PRÉAMBULE D'ACTIVATION, PROCÉDÉ ET APPAREIL DE SYNCHRONISATION

(30) Priority: 19.10.2016 CN 201610913759
(43) Date of publication of application: 07.08.2019
(73) Proprietor: Huawei Technologies Co., Ltd., Longgang District Shenzhen, Guangdong 518129 (CN)
(72) Inventor: GAN, Ming, Shenzhen Guangdong 518129 (CN); LIN, Meilu, Shenzhen Guangdong 518129 (CN); YANG, Xun, Shenzhen Guangdong 518129 (CN)
(74) Representative: Körber, Martin Hans
(86) International application number: PCT/CN2017/106561
(87) International publication number: WO 2018/072692

(56) References cited:
- CN-A- 101 286 753
- CN-A- 101 449 536
- CN-A- 101 742 544
- CN-A- 102 017 527
- CN-A- 102 377 726
- US-A1- 2016 278 013
- REZA HEDAYAT (NEWRACOM): "WUR and Efficiency Tradeoffs ; 11-16-1147-01-0wur-wur-and-efficiency-trad eoffs", IEEE DRAFT; 11-16-1147-01-0WUR-WUR-AND-EFFICIENCY-TRAD EOFFS, IEEE-SA MENTOR, PISCATAWAY, NJ USA , vol. 802.11 WUR, no. 1 19 September 2016 (2016-09-19), pages 1-13, XP068110647, Retrieved from the Internet: URL:https://mentor.ieee.org/802.11/dcn/16/ 11-16-1147-01-0wur-wur-and-efficiency-trad eoffs.pptx [retrieved on 2016-09-19]

## Description

### TECHNICAL FIELD

This application relates to the field of communications technologies, and in particular, to a wake-up preamble generation method, a synchronization method, and an apparatus.

### BACKGROUND

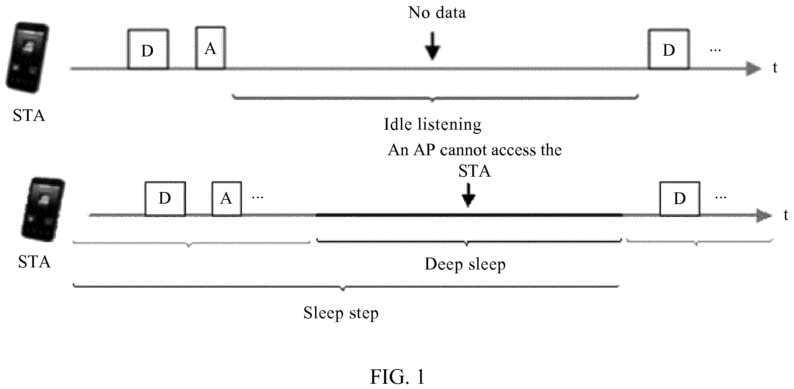

In a Wi-Fi network, a device consumes considerable energy when listening (idle listening) to and receiving a radio signal. To reduce energy consumed during listening, a sleep policy is set for the device. Specifically, as shown in FIG. 1, when a device such as a station (station, STA) does not receive or send a message, for example, in a no data phase, if the STA continuously listens on a channel, a large amount of energy is to be consumed. Therefore, a sleep schedule (sleep schedule) is introduced, so that the STA can enter deep sleep (deep sleep) when no data is sent or received, thereby reducing energy consumed during continuous listening.

However, when the STA is in deep sleep, an access point (access point, AP) cannot communicate with the STA, and communication and transmission between the access point and the STA can be performed only after the STA wakes up. Performing communication after the STA wakes up may cause specific latency (latency). To avoid high latency caused by the sleep schedule, a sleep policy is set for the STA, so that the STA wakes up and detects data sending and receiving when a specified time interval ends. However, compared with a policy of continuously remaining in sleep for a long time, this non-periodic wake-up listening policy causes not only consumption of specific energy but also decrease in sleep efficiency of the STA.

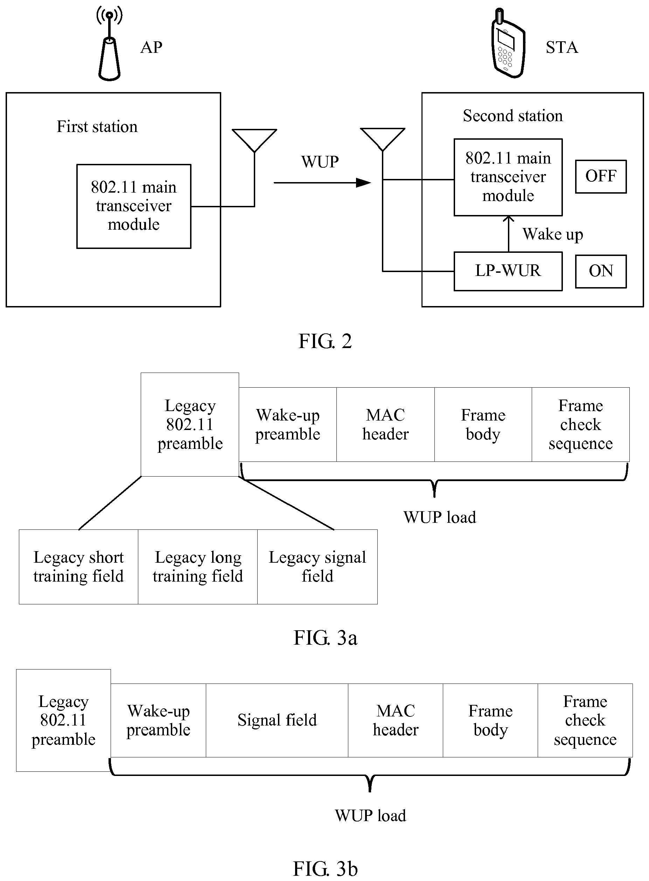

To reduce energy consumption for the sleep policy of the STA, a wake up receiver (wake up receiver, WUR) is additionally disposed in the STA. As shown in FIG. 2, the wake up receiver is configured to: listen to a wake-up frame (wake up packet, WUP) sent by a transmit end, and wake up a main transceiver module of the STA after receiving the wake-up frame. The wake up receiver then switches to a sleep mode. After communication between the main transceiver module and the AP is completed, the wake up receiver then wakes up and continues to listen to channel information. The wake up receiver is used to replace the main transceiver module to listen on the channel when a medium is idle, to further reduce energy consumed when a STA device performs listening.

To implement low power consumption of the wake up receiver when the wake up receiver listens to the channel information, a circuit structure, a structure design of a received frame, and the like of the wake up receiver need to be relatively simple and less complex. For example, a circuit structure design of the wake up receiver includes only an energy detection unit and a radio frequency unit. In this way, the wake up receiver cannot perform demodulation specific to some complex modulation schemes such as OFDM modulation, and consequently, the wake up receiver cannot identify the wake-up frame and therefore cannot complete a synchronization operation. Therefore, a person skilled in the art urgently needs to resolve a technical problem of designing a wake-up frame with a good synchronization property, so that the wake up receiver can perform quick synchronization when receiving the wake-up frame.

US 2016/278013 A1 discloses a wireless communication scenario, wherein an access point (AP) identifies a pending communication for a wireless device and transmits a wakeup message comprising a device specific sequence to a companion radio of the device. The device receives the wakeup message using the companion radio, decodes the message to obtain a device specific sequence, and activates a primary radio. The wakeup message includes a preamble, a signal field, and a data field. In some cases, the wireless device may demodulate the wakeup message using ON-OFF keying (OOK) modulation. The AP and the device may then exchange data using the primary radio.

### SUMMARY

The invention is defined by the appended claims.

### BRIEF DESCRIPTION OF DRAWINGS

To describe the technical solutions in embodiments of this application more clearly, the following briefly describes the accompanying drawings required for describing the embodiments. Apparently, a person of ordinary skill in the art may derive other drawings from these accompanying drawings without creative efforts.
FIG. 1 is a schematic diagram of a radio received signal listening and sleep policy according to an embodiment of this application;
FIG. 2 is a schematic structural diagram of a transmit end and a receive end according to an embodiment of this application;
FIG. 3a is a schematic structural diagram of a wake-up frame according to an embodiment of this application;
FIG. 3b is a schematic structural diagram of another wake-up frame according to an embodiment of this application;
FIG. 4 is a schematic flowchart of a wake-up preamble generation method according to an embodiment of this application;
FIG. 5 is a schematic flowchart of a synchronization method according to an embodiment of this application;
FIG. 6 is a schematic diagram of auto-correlation of a synchronization field whose Barker sequence length is 7 according to an embodiment of this application;
FIG. 7 is a structural block diagram of a first station according to an embodiment of this application;
FIG. 8 is a structural block diagram of a second station according to an embodiment of this application; and

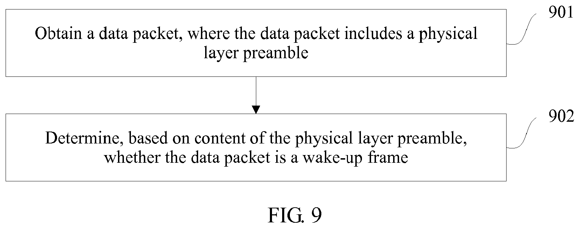

FIG. 9 is a schematic flowchart of a data packet identification method according to an embodiment of this application.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, they are only examples of apparatuses and methods that are described in the appended claims in detail and that are consistent with some aspects of this application.

According to a wake-up preamble generation method provided in this application, a wake-up preamble is used to wake up a receiver, so that a wake up receiver quickly synchronizes with a local sequence without increasing power consumption of the receiver.

The method provided in the embodiments of this application is applied to a WLAN. As shown in FIG. 2, the method is applied to a first station and a second station. The first station is a transmit end, for example, an access point, the access point, or a wireless access point, and the first station further includes a base station, a station, or a STA device, and is configured to generate and send a wake-up frame to the second station. The second station is a receive end, for example, a STA, and the second station includes a main transceiver module and a receiver. Further, the main transceiver module includes a legacy 802.11 transceiver end, an 802.11 main transceiver module, or a Wi-Fi main transceiver module. The receiver is a low power wake up receiver (low power wake up receiver, LP-WUR). In addition, the second station includes user equipment (user equipment, UE), an access point, the access point, or a wireless access point, and further includes another device such as a base station. The LP-WUR is used to replace the main transceiver module to listen on a channel when a medium is idle, and energy consumption of the LP-WUR in a listening or receiving state approximately ranges from 0.1% to 1% of energy consumption of the main transceiver module. In other words, the energy consumption of the LP-WUR is lower than 100 µW. Therefore, energy waste of a receiving device during listening can be effectively reduced by using the LP-WUR in the second station to listen on the channel.

After receiving a wake-up frame from the first station, the receiver in the second station wakes up the main transceiver module in the second station, and then switches to sleep. The first station communicates with the main transceiver module in the second station. After completing communication with the first station, the main transceiver module enters a sleep mode. In addition, the receiver in the second station wakes up and starts listening to determine whether a wake-up frame is sent to the receiver in the second station, to continue to wake up the main transceiver module.

It should be noted that, in the embodiments of this application, the main transceiver module in the second station can be woken up only by the receiver in the second station. In the following embodiment, unless specified otherwise, both the main transceiver module and the receiver are a main transceiver module and a receiver in a same station.

To ensure low power consumption of the receiver, a circuit structure of the receiver is relatively simple. For example, an LP-WUR circuit structure may include only an energy detection (energy detect) module and a radio frequency (radio frequency, RF) module. Therefore, the receiver cannot perform demodulation specific to some complex modulation schemes such as OFDM modulation, and only a simple binary on-off keying (On-Off Keying, OOK) modulation scheme can be used. For OOK modulation, a possible wake-up frame (WUP) structure is shown in FIG. 3a, and the wake-up frame includes a legacy 802.11 preamble (Legacy 802.11 preamble) and a WUP load, and the legacy 802.11 preamble is used to prevent a legacy 802.11 device from interfering in the wake-up frame subsequently. The WUP load may use OOK modulation, and is used to indicate the receiver in the second station and wake up the main transceiver module.

The legacy 802.11 preamble includes a legacy short training field (legacy short training field, L-STF), a legacy long training field (legacy long training field, L-LTF), and a legacy signal field (legacy signal field, L-SIG). The WUP load includes a wake-up preamble (wake-up preamble), a MAC header (MAC Header), a frame body (frame body), and a frame check sequence (frame check sequence, FCS). Further, the wake-up preamble is used to identify a WUP signal. The MAC header may also be a WUR ID, and is used to distinguish between different WURs. The frame carrier is used to carry some other information. The frame check sequence is used to ensure that received data is the same as transmitted data. In addition, the WUR ID information may be a part or all of a station association identifier, or an identifier that is allocated by the first station to a WUR of the station, or a MAC address or a part of a received MAC address, or other information that may be used to distinguish between WURs of different stations. Because all the MAC header, the frame body, and the frame check sequence following the wake-up preamble can carry information, a field following the wake-up preamble is referred to as a signal field or an information sequence. FIG. 3b is a schematic structural diagram of another wake-up frame. A WUP load includes a wake-up preamble, a signal field, a MAC header, a frame body, and a frame check sequence. The signal field is used to carry some physical layer signaling, such as an AP identifier, a WUR ID, and a modulation and coding indication.

The embodiments of this application provide the wake-up preamble generation method. When the WUP load of the wake-up frame uses simple single carrier modulation, such as OOK modulation or frequency shift keying (frequency shift keying, FSK) modulation, the receiver in the second station can perform quick synchronization based on content of the wake-up frame. In other words, the receiver in the second station quickly identifies an end bit of the wake-up preamble or a start bit of the information sequence/information field. Specifically, a technical solution is as follows.

### Embodiment 1

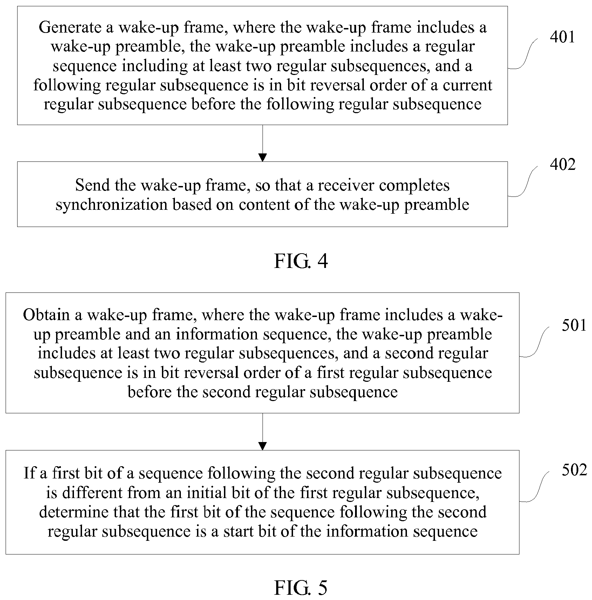

FIG. 4 is a schematic flowchart of a wake-up preamble generation method according to this embodiment. The method includes the following steps:

Step 401: A first station generates a wake-up frame, where the wake-up frame includes a wake-up preamble and an information sequence, the wake-up preamble includes a regular sequence including at least two regular subsequences, and a following regular subsequence is in bit reversal order of a current regular subsequence before the following regular subsequence; or the wake-up preamble includes at least one regular subsequence and a preset field, and the preset field is a synchronization field that has an auto-correlation property and a cross-correlation property or is a start-of-frame delimiter that has a unique sequence.

Step 402: The first station sends the wake-up frame, so that a receiver completes synchronization based on content of the wake-up preamble, where completing synchronization means determining a start bit of the information sequence based on the wake-up preamble.

Specifically, in this embodiment, if the wake-up preamble includes the regular sequence including the at least two regular subsequences, a following regular subsequence is in bit reversal order of a current regular subsequence before the following regular subsequence in these regular subsequences. The regular subsequence is a sequence that includes 1 and 0 and that follows a first rule, for example, "10101010" and "10001000". The bit reversal order means that an initial bit of a second regular subsequence is a last bit of a first regular subsequence and bits of the second regular subsequence are arranged in reverse order of all bits of the first regular subsequence. In addition, the second regular subsequence is located after the first regular subsequence. For example, if the first regular subsequence is "10101010", the second regular subsequence in bit reversal order of the first regular subsequence is "01010101", and the regular sequence is "1010101001010101".

Further, the regular sequence has a fixed length. Optionally, the regular sequence includes several regular subsequences. For example, a quantity of regular subsequences is 2, 3, 4, 5, 6, 7, and 8. Each regular subsequence is in bit reversal order of a previous regular subsequence of the regular subsequence. For example, a regular sequence including two regular subsequences is expressed as "1010101001010101'', "1100110011001100", "1000100010001000", or "1110111011101110", another regular sequence including three regular subsequences is expressed as "101010100101010110101010", "111000111000111000111000111000", "100000100000100000100000100000", or "111110111110111110111110111110", and a regular subsequence including other bytes is expressed in a similar manner. It should be noted that a bit reversal sequence of the regular sequence may also be used as a regular sequence. For example, a bit reversal sequence of "1000100010001000" is "0111011101110111".

Corresponding to the wake-up preamble generated in this embodiment, a synchronization method is further provided. The method is used to identify an end bit of a preamble of a wake-up frame, or identify a start bit of an information sequence, to implement quick synchronization. As shown in FIG. 5, the method specifically includes the following steps:

Step 501: A receiver in a second station obtains a wake-up frame, where the wake-up frame includes a wake-up preamble and an information sequence, the wake-up preamble includes at least two regular subsequences: a first regular subsequence and a second regular subsequence, and the second regular subsequence is in bit reversal order of the first regular subsequence before the second regular subsequence.

Step 502: If a first bit of a sequence following the second regular subsequence is different from an initial bit of the first regular subsequence (including a bit reversal sequence), determine that the first bit of the sequence following the second regular subsequence is a start bit of the information sequence.

For example, if a regular sequence of the wake-up preamble obtained by the receiver from the first station is "1010101001010101", the regular sequence includes two regular subsequences. The regular sequence is read in sequence. If the receiver reads two same consecutive sequence values, it is determined that a latter sequence in the two same sequence values is a start bit of the regular subsequence. In the regular sequence, once two same 0s are read, namely, "00", the latter "0" is the start bit of the regular subsequence. In other words, a start bit of the second regular subsequence "01010101" is "0". Then, the receiver starts to read a following sequence on a basis of bits "01010101" included in the second regular subsequence. It is determined whether the sequence following the second regular subsequence is "10101010". If no, the sequence following the second regular subsequence does not match the first regular subsequence or the second regular subsequence, and it is determined that a first bit located after the second regular subsequence is a start bit of an information part. The receiver may further synchronize the following sequence based on the start bit of the information part. In other words, the receiver completes a synchronization function.

This embodiment provides the wake-up preamble generation method and the synchronization method, so that a case in which the receiver cannot perform synchronization if the receiver misses reading several previous bits is avoided. In other words, regardless of a quantity of missed previous bits, once a start bit of a regular subsequence is determined based on the wake-up preamble, reading can be performed based on bytes (or bits) included in the regular subsequence, and the start bit of the information part can be determined, to implement quick synchronization.

In addition, in this embodiment, if the receiver in the second station reads the regular sequence in the wake-up preamble, the receiver considers that the wake-up frame arrives, and then determines and identifies the start bit of the information sequence, to complete synchronization.

### Embodiment 2

In step 401, the first station generates a wake-up frame. The wake-up preamble includes at least one regular subsequence and a preset field, and the preset field is a synchronization field that has a good auto-correlation property (good auto correlation properties) and a good cross-correlation property (cross correlation properties).

In a possible implementation, the wake-up preamble includes a regular subsequence and a synchronization field, and the regular subsequence is used to notify the receiver in the second station that the wake-up frame arrives.

Optionally, the wake-up preamble further includes two or more regular subsequences, and a combination manner of these regular subsequences is the same as a combination manner in Embodiment 1.

The synchronization field has a good auto-correlation property and a good cross-correlation property. Preferably, the synchronization field is a Barker sequence (Barker sequence). Current available Barker sequences are shown in the following table:

**Table 1**

| Sequence length | Sequence |
|---|---|
| 2 | +1 -1 or +1 +1 |
| 3 | +1 +1 -1 |
| 4 | +1 +1 -1 +1 or +1 +1 +1 -1 |
| 5 | +1 +1 +1 -1 +1 |
| 7 | +1 +1 +1 -1 -1 +1 -1 |
| 11 | +1 +1 +1 -1 -1 -1 +1 -1 -1 +1 -1 |
| 13 | +1 +1 +1 +1-1-1 +1 +1-1 +1 -1 +1 |

Further, if the synchronization field is a Barker sequence, a process in which the receiver determines an information sequence of the wake-up frame after obtaining the wake-up frame sent by the first station includes:
obtaining the wake-up frame, where the wake-up frame includes the wake-up preamble and the information sequence, the wake-up preamble includes at least one regular subsequence and a preset field, and the preset field is a synchronization field that has an auto-correlation property and a cross-correlation property; and
demodulating the synchronization field to generate a demodulation sequence, and if a peak value appears after correlation is performed on the demodulation sequence, determining that a last bit of the demodulation sequence is a last bit of the synchronization field, where a next bit following the synchronization field is a start bit of the information sequence.

Specifically, if the synchronization field is a Barker sequence, that the peak value appears after correlation is performed on the demodulation sequence includes: performing correlation on the demodulation sequence bit by bit based on a Barker sequence with a preset length, where if the demodulation sequence is the same as the Barker sequence with the preset length, the peak value is generated.

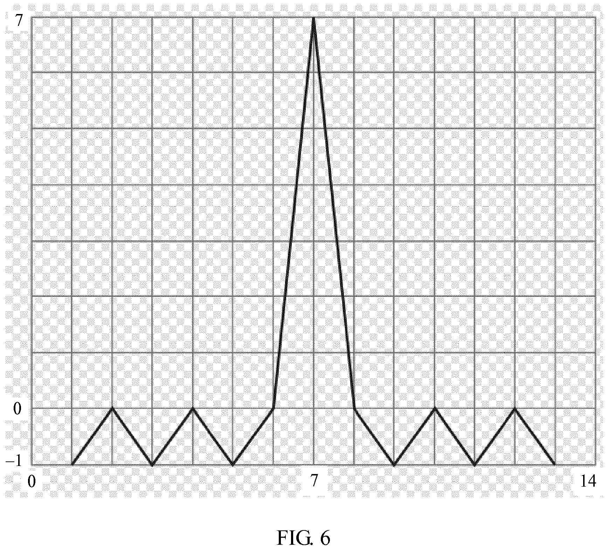

As shown in FIG. 6, the first station modulates the Barker sequence according to a specified modulation scheme, for example, OOK or ASK. For example, the first station modulates a Barker sequence with a length of 7 to 1110010 according to OOK, and then sends 1110010 to the second station by using a wake-up frame. The receiver in the second station obtains the wake-up frame and performs OOK demodulation on the wake-up frame to generate a demodulation sequence. For example, the synchronization field whose Barker sequence length is 7 and that is shown in the foregoing table is expressed as "+1 +1 +1 -1 -1 +1 -1". The demodulation sequence generated after OOK demodulation is performed on the Barker sequence is expressed as "1110010". Once the receiver identifies a regular sequence or a part of a regular sequence, the receiver learns that the wake-up frame arrives. Then, correlation is performed on the demodulation sequence. Correlation is performed on a received sequence bit by bit by using the known Barker sequence with the length of 7 based on "1110010". Once the received sequence is the 7-bit Barker sequence, a peak value appears. As shown in FIG. 6, further, the receiver in the second station may determine that the sequence with the length of seven bits is the synchronization field, and the last bit of the synchronization field is the last bit of the wake-up preamble. The next bit of the synchronization field, namely, an eighth bit, is the start bit of the information sequence.

In another embodiment, the synchronization field may be further expressed in any one of the following forms based on a different length.

**Table 2**

| Length | Synchronization field |
|---|---|
| 16 | 0110111101001110 |
| 16 | 0110 0011 0010 1101 |
| 16 | 1111 0110 1010 1101 |
| 16 | 0010 0001 1111 0110 |
| 16 | 1001 0000 0100 1110 |
| 16 | 0111 1010 0000 1110 |
| 16 | 0111 1011 1100 1001 |
| 16 | 1100 1001 1100 0010 |
| 32 | 0111 1101 1111 1111 0111 0101 1111 1101 |
| 32 | 0111 1101 0101 1111 0101 1101 1111 0111 |
| 32 | 1101 0111 0101 0101 0111 0101 1111 1101 |
| 32 | 0111 1111 1101 1101 0101 0101 1111 1101 |

In addition, a synchronization sequence is used to complete a synchronization function, and may also carry information. For example, the wake-up preamble may carry various synchronization fields each time, and the various synchronization fields indicate different information. For example, if a protocol specifies that the synchronization fields can only be "0110 1111 0100 1110" and "0110 0011 0010 1101", where "0110 1111 0100 1110" indicates that a WUP load of the wake-up frame uses a forward error correction code and "0110 0011 0010 1101" indicates that a WUP load of the wake-up frame does not use a forward error correction code, and a synchronization field carried in a wake-up preamble sent by the first station at a specific moment Time 1 is "0110 1111 0100 1110", the receiver in the second station simultaneously performs correlation based on the two synchronization fields specified in the protocol. If the receiver in the second station finally successfully implements synchronization by using "0110 1111 0100 1110", the receiver learns that the load of the wake-up frame uses a forward error correction code. In addition to carrying information indicating whether an information part uses an error correction code, the synchronization sequence may be further used to indicate a length of a wake-up ID included in the information field shown in FIG. 3b, or may be further used to indicate a length of a CRC (Cyclic Redundancy Check, cyclic redundancy check code) field included in a signal field, or may be further used to indicate a wake-up frame type, a spreading factor, and the like. The length of the wake-up ID or the length of the CRC field is one of a limited quantity of lengths.

In addition, if the synchronization field in the wake-up preamble does not carry indication information, each time the wake-up frame is sent, the synchronization field may be fixed and unchanged.

According to the wake-up preamble generation method and the synchronization method that are provided in this embodiment, because the wake-up preamble includes a regular sequence and the synchronization field, the regular sequence is used to enable the receiver to realize that the wake-up frame arrives. Only when identifying that the wake-up frame arrives, the receiver in the second station performs synchronization by using a local synchronization field. Therefore, if a peak value appears during synchronization, it is determined that the synchronization succeeds, to prevent the receiver from keeping performing a synchronization and reception process.

### Embodiment 3

In this embodiment, another wake-up frame is generated. The wake-up frame includes a wake-up preamble, the wake-up preamble includes at least one regular subsequence and a preset field, and the preset field is a start-of-frame delimiter that has a unique sequence.

Optionally, the wake-up preamble includes a regular subsequence, for example, a regular subsequence "10101010". The regular subsequence is used to notify a receiver that the wake-up frame arrives. In addition, the wake-up preamble further includes two or more regular subsequences, and a following regular subsequence is in bit reversal order of a current regular subsequence before the following regular subsequence. Specifically, a structure of the regular subsequence is the same as the structure of the regular subsequence in Embodiment 1.

If the preset field is the start-of-frame delimiter, for the wake-up frame, the start-of-frame delimiter has a unique sequence, for example, "1111001110100000". Alternatively, the start-of-frame delimiter is represented by an ASCII character of at least one letter, for example, an ASCII character "0110 0010" of "b", or an ASCII character "0110 0010 0110 0001" of "ba" including two letters.

Corresponding to the wake-up preamble having the start-of-frame delimiter, this embodiment further provides a synchronization method, and the method includes:
obtaining, by a receiver in a second station, a wake-up frame from a first station, where the wake-up frame includes a wake-up preamble and an information sequence located after the wake-up preamble, the wake-up preamble includes at least one regular subsequence and a preset field, and the preset field is a start-of-frame delimiter that has a unique sequence; and
detecting a sequence of the wake-up frame in a unit of the start-of-frame delimiter bit by bit, and if the sequence of the wake-up frame is the same as the start-of-frame delimiter, determining that a last bit of the start-of-frame delimiter is a last bit of the wake-up preamble, where a next bit following the wake-up preamble is a start bit of the information sequence.

For example, the start-of-frame delimiter is the ASCII character "0110 0010" represented as "b". After obtaining the wake-up frame, the receiver in the second station performs comparison on wake-up frame sequences one by one, and detects whether the wake-up frame sequences include a sequence that is the same as the start-of-frame delimiter "b" of a local sequence. If it is detected that a sequence is the same as "b", in the wake-up preamble, a last bit "0" of "0110 0010" is a last bit of the wake-up preamble, and a next bit of the wake-up preamble is a start bit of the information sequence.

According to the wake-up preamble generation method and the synchronization method that are provided in this embodiment, because the wake-up preamble includes a regular sequence and the start-of-frame delimiter, the regular sequence is used to enable the receiver to realize that the wake-up frame arrives. If identifying, by using the regular sequence, that the wake-up frame arrives, the receiver can compare the local start-of-frame delimiter with a received and decoded sequence, and once the local start-of-frame delimiter matches the received and decoded sequence, the start bit of the information sequence may be determined, in other words, synchronization succeeds, to prevent the receiver from keeping performing a synchronization and reception process.

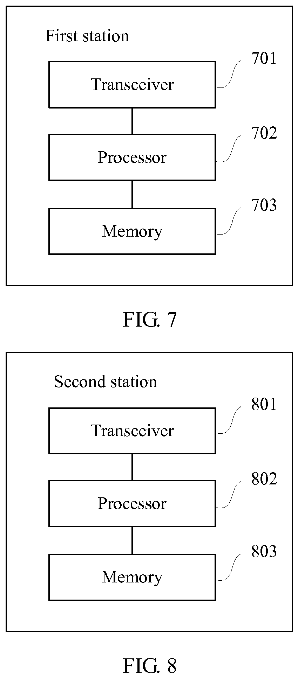

Corresponding to the foregoing embodiment, this embodiment further provides a first station, configured to: generate a wake-up preamble, and send the wake-up preamble to another station by using a wake-up frame. As shown in FIG. 7, the first station includes a transceiver 701, a processor 702, and a memory 703.

The processor 702 is configured to generate a wake-up frame, where the wake-up frame includes a wake-up preamble and an information sequence, the wake-up preamble includes a regular sequence including at least two regular subsequences, and a following regular subsequence is in bit reversal order of a current regular subsequence before the following regular subsequence in these regular subsequences.

Alternatively, the wake-up preamble includes at least one regular subsequence and a preset field, and the preset field is a synchronization field that has an auto-correlation property and a cross-correlation property or is a start-of-frame delimiter that has a unique sequence. The start-of-frame delimiter may be represented by an ASCII character including at least one letter, for example, an ASCII character "0110 0010" of "b", and each regular subsequence includes several 1s and several 0s.

The transceiver 701 is configured to send the wake-up frame, so that a receiver determines a start bit of the information sequence based on content of the wake-up preamble.

The memory 703 is configured to store the generated wake-up frame.

Optionally, if the synchronization field is a Barker sequence, the synchronization field is expressed in the following manner:
if a length of the Barker sequence is 2, the synchronization field is expressed as +1 -1 or +1 +1;
if a length of the Barker sequence is 3, the synchronization field is expressed as +1 +1 -1;
if a length of the Barker sequence is 4, the synchronization field is expressed as +1 +1 -1 +1 or +1 +1 +1 -1;
if a length of the Barker sequence is 5, the synchronization field is expressed as +1 +1 +1 -1 +1;
if a length of the Barker sequence is 7, the synchronization field is expressed as +1 +1 +1 -1 -1 +1 -1;
if a length of the Barker sequence is 11, the synchronization field is expressed as +1 +1 +1 -1 -1 -1 +1 -1 -1 +1 -1; or
if a length of the Barker sequence is 13, the synchronization field is expressed as +1 +1 +1 +1 -1 -1 +1 +1 -1 +1 -1 +1.

In addition, the synchronization field further includes any one of the following:
0110 1111 0100 1110, 0110 0011 0010 1101, 1111 0110 1010 1101, 0010 0001 1111 0110, 1001 0000 0100 1110, 0111 1010 0000 1110, 0111 1011 1100 1001, or 1100 1001 1100 0010; or
0111 1101 1111 1111 0111 0101 1111 1101, 0111 1101 0101 1111 0101 1101 1111 0111, 1101 0111 0101 0101 0111 0101 1111 1101, or 0111 1111 1101 1101 0101 0101 1111 1101.

As shown in FIG. 8, this embodiment further provides a second station, configured to identify an information sequence in a wake-up frame. The information sequence is located after a wake-up preamble, the second station includes a receiver, and the receiver includes a wake up receiver and a low power wake up receiver. A simple circuit structure is disposed in the receiver, for example, the circuit structure includes a radio frequency module and an energy detection module. The receiver includes a transceiver 801, a processor 802, and a memory 803.

The transceiver 801 is configured to obtain the wake-up frame, where the wake-up frame includes a wake-up preamble of a wake-up frame preamble and an information sequence located after the wake-up preamble of the wake-up frame preamble, the wake-up preamble includes at least two regular subsequences, and a second regular subsequence is in bit reversal order of a first regular subsequence before the second regular subsequence.

The processor 802 is configured to: if a first bit of a sequence following the second regular subsequence is different from an initial bit of the first regular subsequence, determine that the first bit of the sequence following the second regular subsequence is a start bit of the information sequence.

The memory 803 is configured to store a data frame sent by a first station and a locally stored sequence field.

Another station provided in this embodiment is also configured to identify an information sequence in a wake-up frame, the information sequence is located after a wake-up preamble, and the station includes a transceiver and a processor.

The transceiver is configured to obtain the wake-up frame, where the wake-up frame includes the wake-up preamble and the information sequence, the wake-up preamble includes at least one regular subsequence and a preset field, and the preset field is a synchronization field that has an auto-correlation property and a cross-correlation property.

The processor is configured to: demodulate the synchronization field to generate a demodulation sequence, and if a peak value appears after correlation is performed on the demodulation sequence, determine that a last bit of the demodulation sequence is a last bit of the synchronization field, where a next bit following the synchronization field is a start bit of the information sequence.

Optionally, if the synchronization field is a Barker sequence, the processor is further configured to: perform correlation on the demodulation sequence bit by bit based on a Barker sequence with a preset length, where if the demodulation sequence is the same as the Barker sequence with the preset length, the peak value is generated.

Optionally, if the received wake-up frame includes a start-of-frame delimiter that has a unique sequence, the processor is further configured to: detect a sequence of the wake-up frame in a unit of the start-of-frame delimiter bit by bit, and if the sequence of the wake-up frame is the same as the start-of-frame delimiter, determine that a last bit of the start-of-frame delimiter is a last bit of the wake-up preamble, where a next bit of the wake-up preamble is a start bit of the information sequence.

It should be noted that, in this application, each of the first station and the second station further includes a transceiver unit, a processing unit, and a storage unit. The transceiver unit is configured to implement a function of a transceiver in the first station or the second station. The processing unit is configured to implement a function of a processor in the first station or the second station. The storage unit is configured to implement a function of a memory in the first station or the second station.

The memory may be a read-only memory (read-only memory, ROM), another type of static storage device that can store static information and an instruction, a random access memory (random access memory, RAM), or another type of dynamic storage device that can store information and an instruction, or may be an electrically erasable programmable read-only memory (electrically erasable programmable read-only memory, EEPROM), a compact disc read-only memory (compact disc read-only memory, CD-ROM), another optical disk storage, an optical disc storage (including a compact disc, a laser disc, an optical disc, a digital versatile disc, a Blu-ray disc, or the like), a disk storage medium, another magnetic storage device, or any other medium that can be used to carry or store expected program code in a form of an instruction or a data structure and that can be accessed by a computer. However, this is not limited thereto. The memory may exist independently, and is connected to the processor by using a bus. Alternatively, the memory may be integrated with the processor. The memory is configured to store application program code used to execute the solutions of this application, and the application program code is executed under control of the processor. The processor is configured to execute the application program code stored in the memory.

This embodiment of this application further provides a computer storage medium, configured to store a computer software instruction used in the wake-up preamble generation method and the synchronization method that are provided in the foregoing embodiment. The computer software instruction includes a program designed to perform the foregoing method embodiment. Receiving and sending of the wake-up frame may be implemented by executing the stored program.

### Embodiment 4

This embodiment is applied to another station device in addition to a first station and a second station. For example, the another station device is a third station. The third station includes a main transceiver module (main radio) and a wake up receiver (WUR). The main transceiver module is configured to receive a data frame from the first station or the second station. This embodiment provides a data packet identification method. The method is used to determine whether a data packet received by a third station is a wake-up frame or a legacy Wi-Fi frame. If it is identified that the data packet is the wake-up frame, a main receiver may stop reading the wake-up frame, to save energy.

It should be noted that the data packet described in this embodiment of this application may be a data frame or a packet, or data in another form. The packet (packet) is a noun in this embodiment of this application. In addition to the data frame in Embodiment 4, a data frame described in another embodiment may also be a data packet. Likewise, the wake-up frame described in this embodiment of this application may be a wake-up packet. In Embodiment 4, the data frame is used as an example to describe identification of the data frame received by the third station.

Specifically, the method includes the following steps:
Step 901: The main receiver in the third station obtains a data frame, where the data frame includes a physical layer preamble.
Step 902: The third station determines, based on content of the physical layer preamble, whether the data frame is a wake-up frame.
Step 903: If the data frame is the wake-up frame, stop reading the wake-up frame.

In this embodiment, the first station generates a wake-up frame. A preamble of the wake-up frame includes a legacy signal field (L-SIG), guard subcarriers on both ends of the legacy signal field carry a preset characteristic signal, and energy of the preset characteristic signal is not equal to 0.

If the preamble of the wake-up frame includes the legacy signal field, the guard subcarriers on both the ends of the legacy signal field carry the preset characteristic signal, or a guard subcarrier on one end of the legacy signal field carries a signal, and a guard subcarrier on the other end does not carry a signal.

Further, the L-SIG usually has 64 subcarriers in total, and has six guard subcarriers and five guard subcarriers respectively on a left end and a right end. The guard subcarrier carries no signal, and therefore, energy is 0. The guard subcarrier described in this embodiment does not include a guard subcarrier of an 802.11ax protocol release. There is one direct current subcarrier in the middle of a preamble of the legacy Wi-Fi frame, and in other 52 subcarriers, four subcarriers are used as pilot subcarriers, and other 48 subcarriers are used as data subcarriers.

The first station sends the wake-up frame, and another station receives the wake-up frame. The another station includes a third station, a fourth station, or the like in addition to the second station. A wake up receiver in the second station receives the wake-up frame, and wakes up a main transceiver module of the second station. The main transceiver of the third station receives the wake-up frame sent by the first station, and determines whether the data frame is the wake-up frame.

The wake-up frame includes a wake-up preamble, and two guard subcarriers on each of both ends of the L-SIG field of the wake-up preamble are selected, to separately carry a total of 16 types of preset characteristic signals such as +1 +1 -1 -1, +1 -1 -1 -1, or +1 +1 +1 +1. Each of the four guard subcarriers on both the ends may carry +1 or -1. The characteristic signal does not include a symbol -1 -1 -1 +1 carried in the guard subcarrier of the 802.11ax protocol release.

Based on a structure of the wake-up preamble provided in this embodiment, step 902 in the method specifically includes:
extracting, by a processor of the third station, a legacy signal field from the data frame;
determining, by the processor of the third station, whether guard subcarriers on both ends of the legacy signal field carry the preset characteristic signal, or determining whether energy on guard subcarriers on both ends of the legacy signal field is 0, where the preset characteristic signal includes any one of 15 types of characteristic signals such as +1 +1 -1 -1, +1 -1 -1 -1, or +1 +1 +1 +1 other than the symbol -1 -1 -1 +1; and
if the guard subcarriers on both the ends carry the preset characteristic signal or if energy on a guard subcarrier on one of both the ends is equal to 0 and energy on a guard subcarrier on the other end is not equal to 0, determining that the data frame is the wake-up frame, where because the characteristic signal carries energy, the receiver detects that energy of the characteristic signal is not 0, and if energy is detected on both the ends of the guard subcarrier, it may be considered that the guard subcarrier carries a preset characteristic signal, in other words, the data frame is the wake-up frame; or
if there is no characteristic signal on the guard subcarriers on both the ends or energy on the guard subcarriers on both the ends is 0, determining that the data frame is not the wake-up frame, and continuing, by the third station, to read following sequence content in the data frame.

It should be noted that two guard subcarriers on each of both ends of an L-SIG field of an 802.11 ax frame are also additionally selected to carry a characteristic signal, and the characteristic signal is -1, -1, -1, +1. Therefore, the data frame provided in this embodiment of this application is a data frame other than the 802.11 ax frame. In other words, the characteristic signal carried in the guard subcarriers on both the ends of the data frame provided in this embodiment may be any other data signal other than -1, -1, -1, +1.

If two guard subcarriers are set on one end of the L-SIG field to carry four types of characteristic signals such as +1 -1, the main receiver may decode a data signal on the four subcarriers to determine whether the legacy Wi-Fi frame or the wake-up frame is received.

Optionally, based on the energy on the guard subcarrier, the main receiver may further determine whether there is energy on the four guard subcarriers, to identify whether the wake-up frame is received. If two guard subcarriers on one end carry a preset characteristic signal and two guard subcarriers on the other end do not carry a preset characteristic signal, the frame is the wake-up frame.

In another implementation, in the wake-up frame generated by the first station, in addition to a legacy signal field (L-SIG), a legacy short training field (L-STF), and a legacy long training field (L-LTF), the preamble of the wake-up frame further includes an empty OFDM symbol, and the empty OFDM symbol is located at a location of a first OFDM symbol following the legacy signal field. Preferably, to improve synchronization efficiency, the empty OFDM symbol is located at a location of an OFDM symbol following the legacy signal field and is closely adjacent to the legacy signal field.

The empty OFDM symbol means that data signals carried in all subcarriers included in the OFDM symbol in frequency domain are 0 or energy of the OFDM symbol detected in time domain is 0, in other words, no energy is detected.

If one empty OFDM symbol is included or the OFDM symbol is indicated as an empty signal in time domain and includes no energy, it is determined that the data frame is the wake-up frame. That the OFDM symbol is indicated as the empty signal means that if data signals carried in all subcarriers included in the OFDM symbol of the physical layer preamble in frequency domain are all 0, when the OFDM symbol is indicated as the empty signal when being switched from frequency domain to time domain. Otherwise, the data frame may be a Wi-Fi frame.

Correspondingly, a method for identifying whether a data frame generated by the first station is the wake-up frame includes the following steps:

If the data frame uses OOK modulation, the third station demodulates the data frame to generate a demodulation sequence, where the demodulation sequence includes a physical layer preamble.

Determining whether a first OFDM symbol following a legacy signal field in the physical layer preamble is an empty OFDM symbol is determining whether data signals carried in all subcarriers included in the OFDM symbol of the physical layer preamble in frequency domain are 0, or determining whether the physical layer preamble is an empty signal in time domain.

If the physical layer preamble includes an empty OFDM symbol, it is determined that the data frame is the wake-up frame.

In addition, each OFDM symbol in a legacy preamble has a length of 3.2 µs. If an OFDM symbol includes a cyclic prefix of 0.8 µs, duration of the OFDM symbol is 4 µs, in other words, duration of an empty signal is 4 µs.

In another implementation, a data frame is provided, such as an 802.11 ax data frame. The data frame includes a legacy short training field (L-STF), a legacy long training field (L-LTF), and a legacy signal field (L-SIG), and further includes a repeated legacy signal field (repeated legacy signal field, RL-SIG). A relationship between the repeated signal field and the legacy signal field is as follows: The RL-SIG is a product of the legacy signal field L-SIG and a preset random sequence value. The preset random sequence value is in a preset random sequence including only -1, a sequence in which +1 and -1 are alternately arranged, or a sequence including +1 and -1 such as a sequence +1 -1, other than a sequence including only +1.

Corresponding to the data frame generated by the first station in the implementation, this embodiment provides a wake-up frame identification method, and the method includes the following steps:

The main receiver in the third station obtains a data frame, where the data frame includes a physical layer preamble.

The third station determines whether a preamble of the data frame includes a repeated legacy signal field RL-SIG, where the RL-SIG is a product of a legacy signal field L-SIG and a preset random sequence value, and the preset random sequence value is in any sequence other than a sequence including only +1.

If the preamble of the data frame includes the repeated legacy signal field RL-SIG, it is determined that the data frame is the wake-up frame; or if the preamble of the data frame does not include the repeated legacy signal field RL-SIG, the frame is a common data frame, for example, a Wi-Fi frame.

The preset random sequence value is a sequence value in a sequence other than the sequence including only +1. If the preset sequence value is in the sequence including +1, the data frame is an 802.11ax frame. Because the 802.11ax frame in this embodiment also uses the L-SIG field and the RL-SIG field, the RL-SIG field is the same as the L-SIG field. Therefore, to distinguish from the 802.11ax frame, the RL-SIG of the wake-up frame generated in this method needs to be multiplied by a random sequence value, for example, the RL-SIG is multiplied by a random sequence value in a sequence including only -1, or the RL-SIG is multiplied by a random sequence value in a sequence in which +1 and -1 are alternately arranged. An 802.11ax main receiver and a main receiver in a later release can identify, by using a special repeated legacy signal field, whether the frame is the wake-up frame, but a main receiver in a release earlier than 802.11 ax cannot identify whether the frame is the wake-up frame.

For the wake-up frame provided in Embodiment 4, because indication information of the wake-up frame is added to the legacy preamble, the main receiver can further identify that the frame is the wake-up frame, to stop reading, thereby saving energy.

Corresponding to Embodiment 4 of the foregoing wake-up frame identification method, in another embodiment, a third station is provided, and the third station includes a main receiver and a processor.

The main receiver is configured to obtain a data frame, where the data frame includes a physical layer preamble.

The processor is configured to determine, based on content of the physical layer preamble, whether the data frame is a wake-up frame.

The processor is further configured to: if the data frame is the wake-up frame, stop reading the wake-up frame.

Optionally, the processor is specifically configured to: extract a legacy signal field from the data frame; determine whether guard subcarriers on both ends of the legacy signal field carry a preset characteristic signal; or determine whether energy on a guard subcarrier is 0; and if guard subcarriers on both ends carry the preset characteristic signal or if energy on a guard subcarrier on one of both ends is equal to 0 and energy on a guard subcarrier on the other end is not equal to 0, determine that the data frame is the wake-up frame.

Optionally, the processor is specifically configured to: determine whether the physical layer preamble includes an empty OFDM symbol, and if the physical layer preamble includes the empty OFDM symbol, determine that the data frame is the wake-up frame. Preferably, the empty OFDM symbol is located after and adjacent to the legacy signal field in time domain.

Optionally, the processor is specifically configured to: determine whether a preamble of the data frame includes a repeated legacy signal field RL-SIG, where the RL-SIG is a product of a legacy signal field L-SIG and a preset random sequence value, and the preset random sequence value is in a sequence including -1 or a sequence in which +1 and -1 are alternately arranged; and if yes, determine that the data frame is the wake-up frame.

According to the third station or another station provided in this embodiment, when the data frame sent by the first station is received, the first station as a transmit end adds the indication information of the wake-up frame to the legacy preamble, such as content including the preset characteristic signal and the signal field, and in this case, when receiving the data frame, the third station as a receive end determines content in the physical layer preamble, to determine whether the data frame is the wake-up frame, and if the data frame is the wake-up frame, the third station stops reading, to save energy.

Embodiment 4 of this application further provides a computer storage medium, configured to store a computer software instruction used in the data frame/packet generation method and identification method that are provided in the foregoing embodiment. The computer software instruction includes a program designed to perform the foregoing method Embodiment 4. Identification of the wake-up frame is implemented by executing the stored program.

The station in the foregoing embodiments of this application, as an end that receives the data frame or the wake-up frame, such as the second station or the third station, may be user equipment (UE), or may be a terminal device, a user terminal, a client, or the like. Specifically, the terminal device further includes a mobile phone, a tablet computer, a palmtop computer, a mobile Internet device, or the like.

A person skilled in the art should understand that the embodiments of this application may be provided as a method, an apparatus (device), or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code. The computer program is stored/distributed in an appropriate medium, provided with other hardware or as a part of hardware, or may be distributed in another form, for example, by using the Internet or another wired or wireless telecommunications system.

This application is described with reference to the flowcharts and/or block diagrams of the method, the apparatus (device), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

Although this application is described with reference to specific features and the embodiments thereof, apparently, various modifications and combinations may be made to them without departing from the scope of this application. Correspondingly, the specification and accompanying drawings are merely examples for description of this application defined by the claims, and are intended to cover any of or all modifications, variations, combinations or equivalents within the scope of this application. Obviously, a person skilled in the art can make various modifications and variations to this application without departing from the scope of this application. This application is intended to cover these modifications and variations of this application provided that they fall within the scope of protection defined by the following claims and their equivalent technologies.

## Claims

1. Awake-up preamble generation method, wherein the method comprises:
generating a wake-up frame (401), wherein the wake-up frame comprises a wake-up preamble, the wake-up preamble comprises a regular sequence consisting of at least two regular subsequences, and a following regular subsequence is in bit reversal order of a current regular subsequence before the following regular subsequence; and
sending the wake-up frame (402), so that a receiver completes synchronization based on content of the wake-up preamble.

2. A synchronization method, used to identify an information sequence in a wake-up frame, wherein the information sequence is located after the wake-up preamble, and the method comprises:
obtaining the wake-up frame (501), wherein the wake-up frame comprises the wake-up preamble and the information sequence, the wake-up preamble comprises at least two regular subsequences, and a second regular subsequence is in bit reversal order of a first regular subsequence before the second regular subsequence; and
if a first bit of a sequence following the second regular subsequence is different from an initial bit of the first regular subsequence, determining (502) that the first bit of the sequence following the second regular subsequence is a start bit of the information sequence.

3. An apparatus, comprising a transceiver (701) and a processor (702), wherein
the processor (702) is configured to generate a wake-up frame, wherein the wake-up frame comprises a wake-up preamble, the wake-up preamble comprises a regular sequence consisting of at least two regular subsequences, and a following regular subsequence is in bit reversal order of a current regular subsequence before the following regular subsequence; and
the transceiver (701) is configured to send the wake-up frame, so that a receiver completes synchronization based on content of the wake-up preamble.

4. An apparatus, configured to identify an information sequence in a wake-up frame, wherein the information sequence is located after the wake-up preamble, and the station comprises a transceiver (801) and a processor (802), wherein
the transceiver (801) is configured to obtain the wake-up frame, wherein the wake-up frame comprises the wake-up preamble and the information sequence, the wake-up preamble comprises at least two regular subsequences, and a second regular subsequence is in bit reversal order of a first regular subsequence before the second regular subsequence; and
the processor (802) is configured to: if a first bit of a sequence following the second regular subsequence is different from an initial bit of the first regular subsequence, determine that the first bit of the sequence following the second regular subsequence is a start bit of the information sequence.

## Patentansprüche

1. Verfahren zur Erzeugung einer Aufweckpräambel, wobei das Verfahren Folgendes umfasst:
Erzeugen eines Aufweckframes (401), wobei der Aufweckframe eine Aufweckpräambel umfasst, die Aufweckpräambel eine regelmäßige Sequenz umfasst, die aus mindestens zwei regelmäßigen Untersequenzen besteht, und eine anschließende regelmäßige Untersequenz eine umgekehrte Bitreihenfolge zu einer aktuellen regelmäßigen Untersequenz vor der anschließenden regelmäßigen Untersequenz aufweist; und
Senden des Aufweckframes (402), sodass ein Empfänger eine Synchronisation auf Grundlage des Inhalts der Aufweckpräambel durchführt.

2. Synchronisationsverfahren, das zum Identifizieren einer Informationssequenz in einem Aufweckframe verwendet wird, wobei sich die Informationssequenz hinter der Aufweckpräambel befindet und das Verfahren Folgendes umfasst:
Erhalten des Aufweckframes (501), wobei der Aufweckframe die Aufweckpräambel und die Informationssequenz umfasst, die Aufweckpräambel mindestens zwei regelmäßige Untersequenzen umfasst und eine zweite regelmäßige Untersequenz eine umgekehrte Bitreihenfolge zu einer ersten regelmäßigen Untersequenz vor der zweiten regulären Untersequenz aufweist; und
wenn sich ein erstes Bit einer Sequenz im Anschluss an die zweite regelmäßige Unterfrequenz von einem Anfangsbit der ersten regelmäßigen Untersequenz unterscheidet, Bestimmen (502), dass das erste Bit der Sequenz im Anschluss an die zweite regelmäßige Unterfrequenz ein Startbit der Informationssequenz ist.

3. Vorrichtung, umfassend einen Sendeempfänger (701) und einen Prozessor (702), wobei
der Prozessor (702) dazu konfiguriert ist, einen Aufweckframe zu erzeugen, wobei der Aufweckframe eine Aufweckpräambel umfasst, die Aufweckpräambel eine regelmäßige Sequenz umfasst, die aus mindestens zwei regelmäßigen Untersequenzen besteht, und eine anschließende reguläre Untersequenz eine umgekehrte Bitreihenfolge zu einer aktuellen regelmäßigen Untersequenz vor der anschließenden regelmäßigen Untersequenz aufweist; und
der Sendeempfänger (701) dazu konfiguriert ist, den Aufweckframe zu senden, sodass ein Empfänger eine Synchronisation auf Grundlage des Inhalts der Aufweckpräambel durchführt.

4. Vorrichtung, die zum Identifizieren einer Informationssequenz in einem Aufweckframe konfiguriert ist, wobei sich die Informationssequenz hinter der Aufweckpräambel befindet und die Station einen Sendeempfänger (801) und einen Prozessor (802) umfasst, wobei
der Sendeempfänger (801) dazu konfiguriert ist, den Aufweckframe zu erhalten, wobei der Aufweckframe die Aufweckpräambel und die Informationssequenz umfasst, die Aufweckpräambel mindestens zwei regelmäßige Untersequenzen umfasst und eine zweite regelmäßige Untersequenz eine umgekehrte Bitreihenfolge zu einer ersten regelmäßigen Untersequenz vor der zweiten regelmäßigen Untersequenz aufweist; und
der Prozessor (802) für Folgendes konfiguriert ist: wenn sich ein erstes Bit einer Sequenz im Anschluss an die zweite regelmäßige Untersequenz von einem Anfangsbit der ersten regelmäßigen Untersequenz unterscheidet, Bestimmen, dass das erste Bit der Sequenz im Anschluss an die zweite regelmäßige Untersequenz ein Startbit der Informationssequenz ist.

## Revendications

1. Procédé de génération de préambule d'activation, dans lequel le procédé comprend :
la génération d'une trame d'activation (401), dans lequel la trame d'activation comprend un préambule d'activation, le préambule d'activation comprend une séquence régulière constituée d'au moins deux sous-séquences régulières, et une sous-séquence régulière suivante est dans un ordre d'inversion de bits d'une sous-séquence régulière actuelle avant la sous-séquence régulière suivante ; et
l'envoi de la trame d'activation (402), de sorte qu'un récepteur achève une synchronisation d'après un contenu du préambule d'activation.

2. Procédé de synchronisation, utilisé pour identifier une séquence d'informations dans une trame d'activation, dans lequel la séquence d'informations est située après le préambule d'activation, et le procédé comprend :
l'obtention de la trame d'activation (501), dans lequel la trame d'activation comprend le préambule d'activation et la séquence d'informations, le préambule d'activation comprend au moins deux sous-séquences régulières, et une seconde sous-séquence régulière est dans un ordre d'inversion de bits d'une première sous-séquence régulière avant la seconde sous-séquence régulière ; et
si un premier bit d'une séquence suivant la seconde sous-séquence régulière est différent d'un bit initial de la première sous-séquence régulière, la détermination (502) du fait que le premier bit de la séquence suivant la seconde sous-séquence régulière est un bit de démarrage de la séquence d'informations.

3. Appareil, comprenant un émetteur-récepteur (701) et un processeur (702), dans lequel
le processeur (702) est configuré pour générer une trame d'activation, dans lequel la trame d'activation comprend un préambule d'activation, le préambule d'activation comprend une séquence régulière constituée d'au moins deux sous-séquences régulières, et une sous-séquence régulière suivante est dans un ordre d'inversion de bits d'une sous-séquence régulière actuelle avant la sous-séquence régulière suivante ; et l'émetteur-récepteur (701) est configuré pour envoyer la trame d'activation, de sorte qu'un récepteur achève une synchronisation d'après un contenu du préambule d'activation.

4. Appareil, configuré pour identifier une séquence d'informations dans une trame d'activation, dans lequel la séquence d'informations est située après le préambule d'activation, et la station comprend un émetteur-récepteur (801) et un processeur (802), dans lequel
l'émetteur-récepteur (801) est configuré pour obtenir la trame d'activation, dans lequel la trame d'activation comprend le préambule d'activation et la séquence d'informations, le préambule d'activation comprend au moins deux sous-séquences régulières, et une seconde sous-séquence régulière est dans un ordre d'inversion de bits d'une première sous-séquence régulière avant la seconde sous-séquence régulière ; et
le processeur (802) est configuré pour : si un premier bit d'une séquence suivant la seconde sous-séquence régulière est différent d'un bit initial de la première sous-séquence régulière, déterminer que le premier bit de la séquence suivant la seconde sous-séquence régulière est un bit de démarrage de la séquence d'informations.
